# EUROPEAN PATENT APPLICATION

(11) **EP 4 005 974 A1**
(43) Date of publication of application: **01.06.2022**
(21) Application number: 20210280.2
(22) Date of filing: 27.11.2020
(51) Int. Cl.: C01B 21/26, C01B 21/28, C01B 21/38, F28C 3/02, F28D 1/00

(54) **AMMONIA BURNER FOR NITRIC ACID PRODUCTION**

(71) Applicant: CASALE SA, 6900 Lugano (CH)
(72) Inventor: RIZZI, Enrico, 22070 Casnate con Bernate (CO) (IT)
(74) Representative: M. Zardi & Co S.A.

(57) **Abstract**

An ammonia burner (1) comprising an ammonia section (2) for ammonia oxidation and a combined heat exchange section (3) for heating a process stream (9), wherein said ammonia section and heat exchange section are coaxially arranged in a pressure vessel (P) of the burner and the hot nitrogen oxides-containing effluent gas (402) from the ammonia section (2) is directed to a shell side (301) of the heat exchange section (3) so that said effluent gas (402) transfers heat to the process stream (9).

## Description

### Field of application

The invention relates to the field of synthesis of nitric acid and related equipment. Particularly the invention relates to a novel design of an ammonia burner.

### Prior art

The industrial production of nitric acid uses a well-known process described in the literature for example in Ullmann's Encyclopedia of industrial chemistry.

The process involves the catalytic oxidation of ammonia over a suitable catalyst, which is typically a platinum/rhodium catalytic gauze. Said catalytic oxidation of ammonia is performed in the presence of oxygen, typically by mixing a gaseous stream of ammonia (NH₃) with a pre-heated current of air, to yield a hot gaseous effluent containing nitrous oxide (N₂O) and nitric oxides (NO and NO₂). The nitrogen oxides-containing gas is then absorbed in water to produce nitric acid and a tail gas.

In more details, the oxidation of ammonia includes the following reaction:

4*NH*₃ + 5*O*₂ ↔ 4*NO* + 6*H*₂*O*

The nitric oxide generated from this oxidative step is then further oxidised with excess air to yield nitrogen dioxide (NO₂) according to the chemical equilibrium:

2*NO* + *O*₂ ↔ 2*NO*₂

The gaseous stream generated after these two oxidative steps contains a mixture of nitrogen oxides including NOₓ (mainly NO and NO₂) and N₂O obtained as a byproduct. Oxygen and nitrogen may be present as well in residual amount.

Said gaseous effluent, after proper cooling usually from 1000 °C to 300-400 °C, is then absorbed in water in a specifically designed absorption tower, to yield an aqueous solution of nitric acid (generally 60 wt% to 68 wt%) according to the following reaction:

3*NO*₂ + *H*₂*O* ↔ 2*HNO*₃ + *NO*

After absorption, the remaining tail gas containing nitrogen oxides (NOx and N₂O) is processed to remove NOx and N₂O in order to satisfy the applicable environmental emission regulations and is vented into the atmosphere.

The catalytic oxidation of ammonia is carried out in a so-called ammonia burner reactor or simply ammonia burner.

Typically, the ammonia burner includes an axial-flow catalytic basket that retains a fine mesh gauze of the Pt-Rh catalyst. The catalyst gauze is delicate and expensive. A uniform gas flow is required to avoid damage and properly exploit the catalyst. To this purpose, the basket usually comprises an inert material layer below the catalyst gauze, to provide a uniform support to the gauze and a uniform pressure drop. The basket may further comprise a gas distribution system, such as a perforated plate or honeycomb grid located above the basket itself.

The design of the ammonia burner is challenging due to a number of reasons which are detailed below.

First, the ammonia burner operates at a high temperature developed by the exothermic ammonia oxidation reaction and in a corrosive environment. The material requirements are therefore highly demanding.

The catalytic basket is normally supported by a plurality of radially arranged beams which extend substantially along the full diameter of the vessel, e.g. around 4 or 5 metres. Said support beams in the conventional design are stressed components as they have a considerable length, due to the large diameter of the apparatus, and they are exposed to the hot gas effluent from the catalytic basket. Alternatively, the support beams may be arranged parallel instead of radially, but the problem remains because the central beams will have a length same as the diameter of the vessel.

The conventional design normally provides a heat recovery exchanger in the form of coils arranged immediately below the catalyst basket and above the supporting beams, so that the effluent gas is cooled before it reaches the supporting beams. The provision of said heat exchanger is deemed essential in the prior art not only to recover heat from the effluent gas but also to mitigate the stress of the support radial beams.

The ammonia burner is typically equipped with a full-opening flange to allow extraction of a spent catalyst gauze for replacement, and extraction of the above mentioned heat exchange coils for maintenance or repair, e.g. in case of a leakage. The catalyst gauze is a single-piece item having almost the same diameter as the pressure vessel of the burner, then a full-diameter flange is necessary to remove and replace the gauze.

The current market of nitric acid plant pushes towards an increase in the production capacity that requires to re-size all the equipment involved in the synthesis process. Particularly there is the need to design single items of a greater capacity, which is more economically attractive than arranging multiple items in parallel.

In the prior art, the maximum diameter of the ammonia burner is dictated by the need to provide a flange with full aperture. At the typical operating pressure of ammonia burners of around 7 bar, the maximum diameter which is practically achievable is around 7 meters. A flange of a larger diameter would be difficult to realise with a proper tightness and would introduce a high risk of leakage. Still another limiting factor is represented by the supporting beams of the catalyst basket. Increasing the diameter of the equipment requires longer supporting beams which are at higher risk of mechanical failure.

The up-sizing of the ammonia burner is the currently most challenging operation because of the above mentioned limit of the diameter and because a further increase in the length of the support beams, to match the diameter of the burner, may increase the risk of mechanical failure.

It is desirable to provide an ammonia oxidation burner able to operate at high capacity and able to withstand demanding operating conditions such as high temperature and corrosive environment. At the same time, the burner must allow a convenient access to the tube bundles and easy replacement of the catalyst.

### Summary of the invention

The invention aims to overcome the above drawbacks and limitations of the prior art. In particular, the present invention aims to provide a novel and reliable ammonia burner reactor able to satisfy high production demand of nitrogen oxides.

The above aims are reached with an ammonia burner according to the claims. The invention further relates to a nitric acid plant including said ammonia burner and to a process for the synthesis of nitric acid using said ammonia burner.

The ammonia burner of the invention is a combined apparatus which includes an ammonia oxidation section and a heat exchange section, wherein heat removed from the hot gas generated in the oxidation of ammonia is used to heat a selected process stream. Said process stream may be any stream of the nitric acid production process or of an ammonia synthesis process coupled to the nitric acid process.

The ammonia oxidation section and the heat exchange section are contained in a single pressure vessel of the ammonia burner and are arranged coaxially one around the other. The heat-exchange section is arranged centrally in the combined ammonia burner while the ammonia oxidation section has an annular configuration and is arranged coaxially around the heat exchanger section.

The invention provides a combined apparatus wherein: a nitrogen oxides containing gas is produced for subsequent absorption into water and production of nitric acid; in a concomitant way, heat is recovered from said hot gas by transfer to a suitable process stream.

The invention has the advantage of combining two equipment in a single pressure vessel with the related advantage, such as reduction of piping and foundations. Another advantage of the invention is that the coaxial design of the ammonia oxidation section and of the heat exchange section allows reducing the length of the supporting beams of the catalytic basket. Accordingly, a vessel of a diameter larger than the prior art can be realised. These and other advantages will emerge with the following description of preferred embodiments of the invention.

### Description of the invention

The heat exchange section of the ammonia burner has a first side and a second side. The first side is traversed by the selected process stream while the second side is traversed by a stream of NOx-containing hot gas produced in the ammonia oxidation section. Accordingly, the first side is a cold side and the second side is a hot side.

Said first side and second side of the heat exchange section are not in a fluid communication but are arranged in a heat exchange relationship so that heat can be efficiently transferred from the hot gas in the second side to the cold stream in the first side. The ammonia burner is configured internally so that at least part of the nitrogen oxides containing hot gas effluent from the ammonia oxidation section traverses the second side of the heat exchange section. Accordingly, the hot gas in the second side represents a heat source for the process stream.

The heat exchange section may include a bundle of tubes. Preferred embodiments include U-tubes or bayonet tubes. In a tube heat exchange section said first side is the inside of the tubes and said second side is a region outside and around the tubes. Said second side may be delimited by a suitable internal shell of the burner and may be denoted as shell side.

A tube bundle of the heat exchange section can include a plurality of tubes not in fluid communication with each other which can be traversed by multiple process streams. Said process streams may be at different pressures between each other to optimise the heat transfer from the hot gas to the cold process streams.

The heat exchange section is preferably located in an upper part of the burner. In an embodiment, the heat exchange section includes a bundle of tubes that are fitted on top of the ammonia burner and can be extracted e.g. from top of the apparatus. This facilitates maintenance and inspection of the bundle of tubes.

A burner according to the invention can be realized with no full-diameter flange. One or more manholes having smaller size compared to a full opening flange may be provided in the pressure vessel to enable the replacement of the reaction catalyst at the end of a production cycle and as well to enable the inspection of the bundle of tubes.

The ammonia oxidation section may be configured to be traversed by the ammonia/air mixture with an axial flow or with a radial or axial-radial. An axial flow is understood as a flow which is parallel or substantially parallel to a central axis of the apparatus. Said axis is normally a vertical axis. A radial flow is understood as a flow which is directed toward or away from said axis. The term axial-radial denotes a flow having a radial component and an axial component.

In a radial flow or axial-radial flow embodiment, the catalyst is preferably in a granular form instead of a gauze. For example, a granular catalyst suitable for the oxidation of ammonia is based on oxides of cobalt. The granular catalyst may be in the form of granules or pellets.

In a radial flow or axial-radial flow embodiment, the catalyst may be contained within an outer collector and an inner collector. Said collectors are made by gas-permeable (e.g. perforated) walls. The central heat exchange section may be partially or entirely located inside the inner collector.

In a preferred embodiment particularly with axial-flow through the ammonia oxidation catalyst, the burner includes a catalyst-retaining basket that is supported by a plurality of radially arranged beams. Each of said radial beams may extend from an inner beam support to an outer beam support.

The radial beams supporting the catalytic basket may rest isostatically over said inner beam support and outer beam support. Said beam supports may have the shape of rings.

The inner beam support may be integral with an internal shell delimiting the shell side of the heat exchange section; the outer beam support may be integral with a wall surrounding the annular ammonia oxidation section. Said wall around the ammonia oxidation section may delimit a cooling channel between the wall itself and a pressure vessel of the ammonia burner. This cooling channel may be traversed by the input ammonia/air mixture for cooling the pressure vessel.

The above mentioned cooling channel may extend across the perimetral base and on the bottom of the burner, thus enabling to cool down the so-called hot zone of the apparatus, which is exposed to the highest temperature developed by the exothermic oxidation reaction. To further limit the thermal stresses on the perimetral base of the burner, an additional thermo-reflecting coating may be wrapped around the cooling channel. Said coating may further shield the wall from the hot gas exiting the catalytic basket.

The input mixture of ammonia and air may be fed at the center of the perimetral base of the ammonia burner to enable uniform distribution of the gas mixture. A uniform distribution of the gas mixture allows effective exploitation of the reaction catalyst.

In some embodiments the radial beams may be internally cooled. Embodiments with internally cooled radial beams may further alleviate the thermal stress and provide a more reliable operation under high temperature.

In a preferred embodiment of internally cooled radial beams, said radial beams are realized as hollow bodies including an internal channel arranged to be traversed by a cooling medium. Said cooling medium is preferably a portion of an input mixture of ammonia and oxidant fed to the ammonia burner. The burner may comprise at least a first inlet for a primary stream of said mixture of ammonia and oxidant, which is directed to the ammonia oxidation section, and a second inlet for a secondary stream of said mixture, in communication with the internal cooling channels of the radial beams. Preferably the flow of cooling medium in the cooled beams is directed outward.

The ammonia oxidation catalyst may be any catalyst suitable for the oxidation of ammonia in the presence of air or more generally in the presence of oxygen. Preferably the catalyst is a Pt-Rh catalyst, which is conventionally used for the oxidation of ammonia in the context of nitric acid production. The Pt-Rh catalyst is generally in the form of gauze or a plurality of gauzes.

The oxidation catalyst may lay down over an inert filling layer supported by a knitted net. The inert filling layer may include a porous structure to induce a suitable pressure drop of the gaseous stream. The size and shape of the porous structure may be optimised to achieve an optimal pressure drop and an optimal gaseous flow distribution across the catalyst.

The ammonia oxidation catalyst may be in the form of one or more sheets of fine wire gauzes. The wire gauzes may be packed in multiple layers, preferably 10 to 50 layers and more preferably 10 to 30 layers.

In an embodiment of the present invention, particularly for an axial-flow ammonia burner, the catalyst is radially segmented. Particularly, the catalyst in the form of a catalyst gauze having one or more layers and arranged into multiple radial segments instead of a single disc-like element as in the prior art. Said radial segments may be arranged so that adjacent segments are partially overlapping. More preferably, said radial segments may be arranged so that at any location of the catalyst gauze, the number of overlapping segments and therefore the number of layers of gauze is the same.

The arrangement of a catalyst gauze into multiple radial segments facilitates the insertion and replacement of the catalyst. Each radial segment can be individually inserted, removed or replaced. This is a considerable advantage especially when the inside of the apparatus is only accessible via a manhole and a full-diameter opening is not available.

Furthermore, the radial segmentation of the catalyst gauze may facilitate its gas-tight fixation to an outside wall of the catalyst basket, compared to a gauze made of a single disc-like element. Particularly each segment may better adapt to follow the change in orientation from horizontal flat (basket bottom) to vertical cylindrical (basket wall) and/or to conform to the fixation wall leading to a better compensation of tolerances of working or thermal expansion. Therefore, even the peripheral seal of the catalyst gauze may be improved according to the invention.

The catalyst segments may be fixed on the wall of the catalyst-retaining basket through a support comprising multiple concentric rings.

The radially arranged support beams may have typically a length of 1 to 2 meters. The radial support beams may extend from an outer wall of the central heat exchanger section to an outer wall of the ammonia oxidation section, which means they extend over a length which is significantly shorter than the diameter of the entire apparatus. Being shorter than a conventional design, the radial beams of the catalyst basket are less stressed, can be realised more economically and are less exposed to risk of failure.

Advantageously, by using radially arranged support beams of reduced length compared to the beams used in a traditional design enables to re-size the ammonia burner to obtain the desired nitrogen oxide production capacity.

Due to the reduced stress condition of the support beams, in some embodiments, the cooling of the ammonia oxidation gas may not be indispensable to ensure the integrity of the support beams. Accordingly, an embodiment of the present invention provides that no heat exchanger is interposed between the catalyst-retaining basket and the support beams. The absence of said heat exchanger may reduce the cost and eliminate an item which is not easily accessible for inspection and maintenance. The provision of such heat exchanger however, is not excluded by the invention.

In the first side (cold side) of the heat exchange section, one or more process streams can be heated. The cold side may include separate passages adapted to fluids at different pressures.

In an interesting embodiment, said first side of the heat exchange section is connected to a line arranged to feed the tail gas of the absorber to an expander for energy recover. Prior to the expander, a stage for removing NOx (de-NOx) may be provided. Said expander may be for example a gas turbine. In this embodiment, the apparatus of the invention may act as a combined ammonia burner and tail gas heater, wherein the tail gas is heated before removal of NOx and expansion.

In another interesting embodiment, said first side of the heat exchange section is connected to a line which is part of a steam system of the plant. In such a case the ammonia burner of the invention may act as a combined ammonia oxidation reactor and steam generator or steam superheater.

In another embodiment, said first side of the heat exchange section is connected to a line of a mixture of hydrocarbon and steam to be reformed. In this case, the ammonia burner of the invention may act as a combined ammonia oxidation reactor and gas-heated reformer (GHR).

Preferably at least 30% of the heat generated by the ammonia oxidation, preferably at least 50%, is transferred to the one or more process stream(s).

Particularly preferably, the temperature drop (delta-T) of the ammonia oxidation gas (nitrous gas) in the heat exchange section is 400 °C to 500 °C. Preferably, said ammonia oxidation gas is cooled in the heat-exchange section from an inlet temperature of 900 °C or about 900 °C to an outlet temperature of 450 to 500 °C when the hot nitrogen oxides-containing effluent gas leaving the ammonia burner is directly adsorbed in water without requiring the addition of a further cooling step.

The cold stream in the heat exchange section may be heated from about 400 °C to 700 - 800 °C.

### Description of the figures

The invention is now further elucidated with reference to preferred embodiments and with the help of the figures.
Fig. 1 is a schematic representation of an ammonia burner according to an embodiment of the invention.
Fig. 2 is a schematic representation of the heat exchange section of the ammonia burner according to a first embodiment.
Fig. 3 is a schematic representation of the heat exchange section of the ammonia burner according to a second embodiment.
Fig. 4 is a scheme of a cooling system of the support beams which may be provided in the ammonia burner according to an embodiment.
Fig. 5 is a schematic representation of radial segments of a catalyst gauze.
Fig. 6 is a simplified block scheme of a first embodiment of a nitric acid synthesis plant including the ammonia burner of Fig. 1.
Fig. 7 is scheme of a second embodiment of a nitric acid synthesis plant including the ammonia burner of Fig. 1.
Fig. 8 is a scheme of an integrated plant for the synthesis of ammonia and nitric acid wherein ammonia oxidation and hydrocarbons reforming are carried out in a combined ammonia burner and GHR according to an embodiment of the invention.

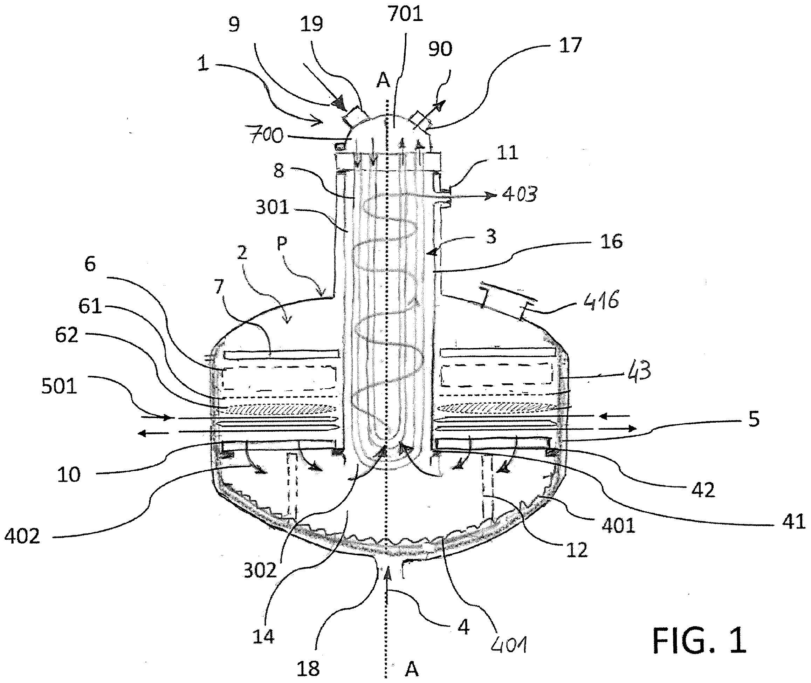

Fig 1 illustrates an ammonia burner reactor, or simply ammonia burner 1, including an axial-flow ammonia oxidation section 2 and a heat exchange section 3.

The ammonia oxidation section 2 and the heat exchange section 3 are contained in a pressure vessel P of the ammonia burner 1. The ammonia burner 1 is substantially symmetric around a main vertical axis A-A. The oxidation section 2 is axial-flow because it is traversed by the gas substantially in the direction of the axis A-A.

The main inputs and outputs of the ammonia burner 1 are: an input nozzle 18 for a gaseous mixture 4 of ammonia and air; an output nozzle 11 for a cooled ammonia oxidation gas 403 produced in the oxidation section 2; an input nozzle 19 for a process stream 9; an output nozzle 17 for said process stream, which leaves the heat exchange section 3 as heated stream 90.

The oxidation section 2 and the heat exchange section 3 are coaxially arranged relative to the main axis A-A. More specifically, the oxidation section 2 has an annular shape and is coaxially arranged around the heat exchange section 3.

The ammonia oxidation section 2 includes a catalyst-retaining basket 6. The catalyst-retaining basket 6 comprises a catalyst (e.g. Pt-Rh) gauze 61 suitable for oxidising gaseous ammonia in the presence of oxygen. The basket 6 may also comprise an inert filling layer 62 positioned below the catalyst gauze 61. Said inert layer 62 uniforms the pressure drop and the gas distribution across the gauze 61.

The ammonia oxidation section 2 further includes a gas distributor 7. The gas distributor 7 may include a honeycomb grid optimised to distribute the gas flow across the catalyst-retaining basket.

The ammonia-air input nozzle 18 is in communication with the distribution device 7 via a peripheral channel 5 delimited between an internal cylindrical wall 43 and an outer wall of the pressure vessel P of the burner.

The cylindrical wall 43 surrounds the annular ammonia oxidation section (basket wall) and preferably also the perimeter base of the burner.

Preferably the channel 5 has a heat-reflective coating 401 to avoid excessive thermal stress on the wall of the pressure vessel P caused by the hot ammonia oxidation gas 402 exiting the catalyst retaining basket 6.

The heat exchange section 3 includes a shell-and-tube heat exchanger with a bundle of tubes 8. The inlet of the tubes 8 is in communication with the input nozzle 19 and the outlet of the tubes 8 is in communication with the output nozzle 17.

The tube bundle of the heat exchange section 3 is preferably removable from the ammonia burner 1. Preferably the tube bundle can be extracted from top of the burner 1.

On top of the heat exchange section 3, a distributor is provided, having a first chamber 700 in communication with the inlet 9 and the inlet of tubes 8, and a second chamber 701 in communication with the outlet of tubes and with the output 17.

The inside of the tubes 8 represents a first side, i.e. a tube side, of the heat exchange section 3. The ammonia burner 1 further includes an internal shell 16 around the tubes 8. Said shell 16 delimits a region around the tubes 8 which represents a second side, i.e. a shell side 301, of the heat exchange section 3.

Said shell side 301 is arranged to receive the ammonia oxidation gas 402 from the ammonia oxidation section 2. Particularly, the shell side 301 is in communication with a collection chamber 14 wherein the effluent 402 of the burner is collected. Preferably, as in Fig. 1, said collection chamber 14 is in the lower part of the ammonia burner 1.

The shell side 301 is also in fluid communication with the output nozzle 11, through which the ammonia oxidation gas leaves the burner 1.

In a preferred embodiment the shell side 301 has a gas inlet port 302 arranged at a lower end of the bundle of tubes 8. Accordingly, a gas flow in the shell side 301, entering via the port 302, is substantially directed upwards leaving the heat exchange section 3 from the output nozzle 11 located in the upper end of the ammonia burner.

The shell side 301 is not in fluid communication with the tube side, i.e. with the inlet of the tubes 8. Accordingly, the ammonia oxidation gas 402 does not mix with the process stream 9 in the tubes.

The basket 6 is supported by a plurality of radial support beams 10. Each of the support beams 10 rests isostatically over an outer ring 42 and an inner ring 41. The outer ring 42 is preferably integral with the internal cylindrical wall 43 of the cooling channel 5 and the inner ring 41 is preferably integral with the shell 16. Intermediate supports 12 may be added in the chamber 14 to support the radial beams 10 and provide further mechanical stability to the catalyst-retaining basket 6.

Looking at Fig. 1 it can be appreciated that, due to the coaxial arrangement of the ammonia burner section 2 and heat exchange section 3, the support beams 10 are relatively short. The distance between the supports 41 and 42 is reduced compared to a conventional design of ammonia burners with full-diameter support beams. A related advantage is a less severe stress of said beams 10 and the possibility to avoid cooling of the beams. Particularly the reduced size of said support beams 10 enables to re-size the ammonia burner to reach high productivity in nitrogen oxides gas that is the precursor reagent for the synthesis of nitric acid.

A heat exchanger 501 can be interposed between the catalyst-retaining basket 6 and the support beams 10. This heat exchanger 501 removes heat from the hot effluent gas 402 and reduces the thermal stress on the beams 10. However, due to the reduced length of the beams 10, an embodiment is also possible wherein no such heat exchanger is provided.

The operation of the ammonia burner 1 of Fig. 1 is the following. The ammonia-air mixture 4 entering via the nozzle 18 cools down the pressure vessel P while passing in the cooling channel 5 and finally enters the ammonia oxidation section 2 via the top distributor 7. The oxidation section 2 is traversed with a substantially axial flow, parallel to the axis A-A and directed downward. The ammonia in the mixture 4 is oxidised leading to the gas stream 402 comprising N₂O and nitrogen oxides NOₓ, which is collected in the lower chamber 14. The term of NOₓ is used below to collectively denote NO, NO₂ and N₂O₄.

The collection chamber 14, wherein the effluent 402 of the ammonia burner 2 is collected before the passage through the heat exchange section 2, may help the ammonia oxidation reaction reach a thermodynamic equilibrium.

From the chamber 14, the ammonia oxidation gas 402 enters the shell side 301 of the heat exchange section 3 via the lower port 302. In the shell side 301, the ammonia oxidation gas 402 flows upward and transfers heat to the tubes 8, eventually leaving the shell side via the nozzle 11 as cooled gas 403.

The process stream 9 enters the tubes 8 from the first chamber 700 and is collected in the second chamber 701 after passage in the tubes where it is heated by the hot gas 402 flowing around the tubes.

The ammonia oxidation gas 402 may have a temperature of about 800-1000 °C, for example of about 850 to 950 °C. The cooled gas 403 may have a temperature of about 300 to 700 °C, for example of about 450 to 600 °C.

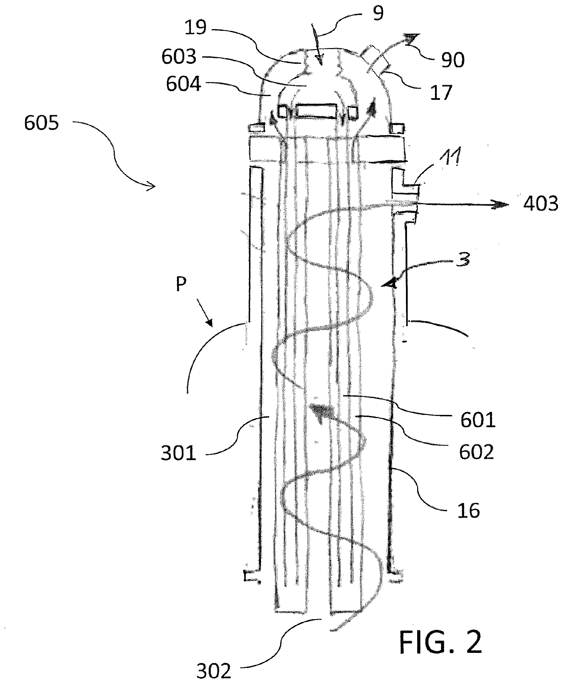

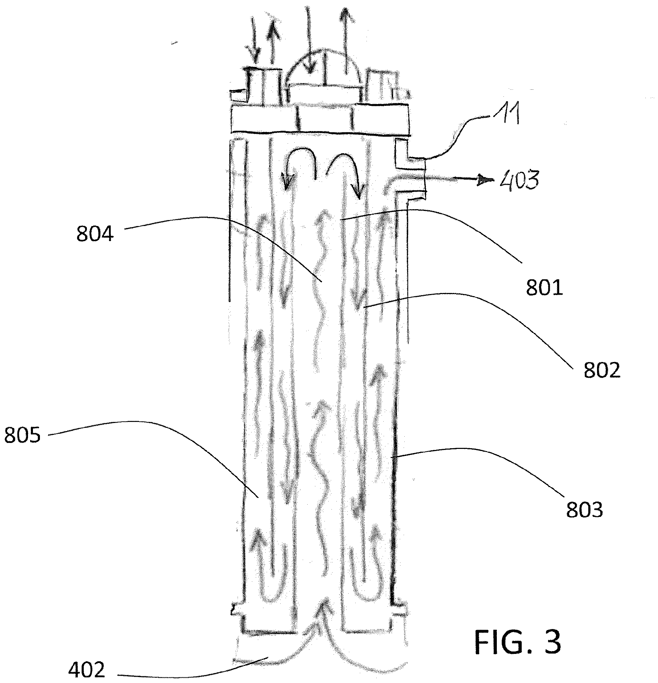

Figs. 2 and 3 illustrate other embodiments of the heat exchange section 3.

Fig. 2 illustrates a heat exchange section 3 with a bayonet-tube heat exchanger 605. The exchanger 605 includes bayonet tubes wherein each tube has an inner passage 601 and an outer passage 602. In each tube, the outer passage 602 is arranged coaxially around the inner passage 601. The inner passage 601 is in fluid communication with the input nozzle 19 via a distribution chamber 603. The outer passage 602 is in fluid communication with the output nozzle 17 via a collection chamber 604.

Fig. 3 is a scheme of a heat exchange section 3 with multiple passages in the shell side. The multiple passages are delimited by internal shells 801, 802 and an outer shell 803. The shell side includes a first region 804 delimited by the shell 801 and a second region 805 around said shell 801. Said two regions 804, 805 may accommodate two tube bundles. In the example the region 804 is traversed first by the hot gas 402. For example, a tube bundle in the region 805 may be an evaporator and a tube bundle in the region 804 may be a steam superheater.

In another embodiment, which is a variant of Fig. 1, the tubes may have inlets and outlets on concentric portions of the tube sheet.

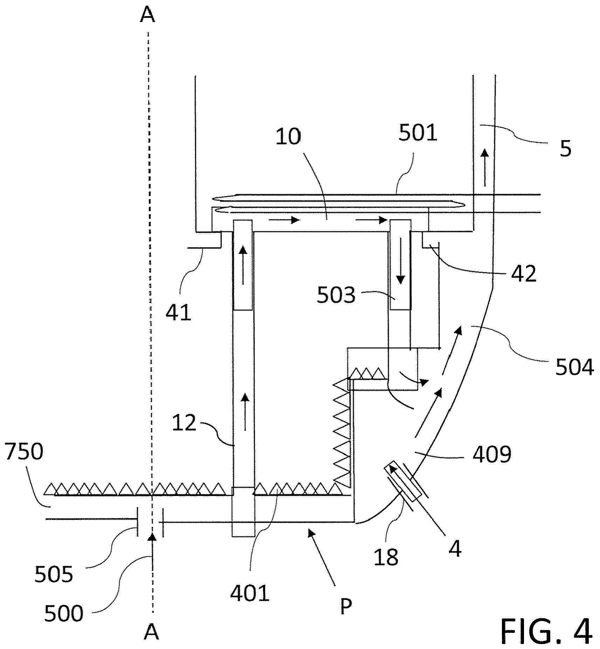

Fig. 4 illustrates schematically an embodiment wherein the radial beams 10 are internally cooled. Particularly, the beams 10 are traversed by some or all of the ammonia-air mixture 4.

The support beams 10 and the vertical supports 12 in this embodiment are hollow bodies having an internal channel. The internal channels of the beams 10 and supports 12 are in fluid communication between each other. Particularly each radial beam 10 has a channel with an inlet side and an outlet side wherein the inlet side is in communication with an inlet nozzle 505 via the internal channel of at least one vertical support 12 and a cooling channel 750 that develops partially along the walls of the vessel P; the outlet side is in communication with a toroidal distributor 409 by means of a duct 503 and a passage 504.

A heat-reflective coating 401 can be wrapped around the cooling channel 750 and/or the toroidal distributor 409 to shield the wall of the pressure vessel P from the hot ammonia oxidation gas 402.

It can be seen from Fig. 4 that a portion 500 of the ammonia-air mixture, which is admitted at the input nozzle 505, traverses the internal channel of support beams 10 acting as a cooling medium, before joining with the rest of the ammonia-air mixture in the distributor 409 from which it passes into the channel 5.

The ammonia-air mixture 4 entering at the nozzle 18 may be regarded as a primary stream of ammonia-air, while the mixture 500 entering at nozzle 505 may be regarded as a secondary stream of ammonia-air. The flow rate of said secondary stream may be controlled with suitable means, e.g. a valve, based on the reaction conditions, to ensure that the temperature of the beams 10 is maintained within an acceptable range.

The distributor 409 may be simplified in the embodiment with internally cooled beams 10. The distributor 409 may be realised as a toroidal tube inside or outside the vessel P.

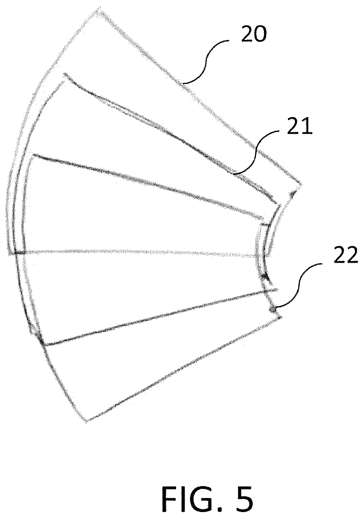

The catalyst gauze 61 may be arranged into multiple radial segments. Fig. 5 illustrates an example of three radial segments 20, 21, 22 of a segmented catalytic gauze. The catalyst segments may be fixed on the wall of the catalyst-retaining basket through a support comprising multiple concentric rings or a ring divided in sectors attached (e.g. bolted) to the internal wall of the basket.

The catalytic gauze, or its radial segments, may include multiple layers of wire gauzes preferably between 10 to 50 and more preferably between 10 to 30.

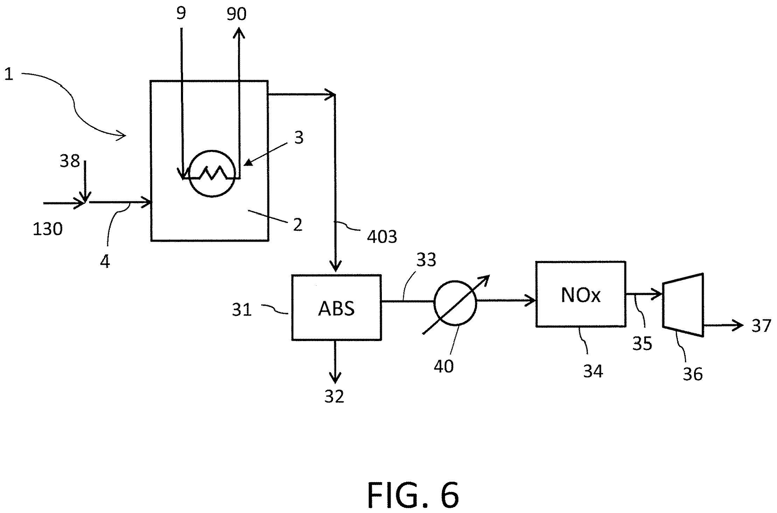

Fig. 6 illustrates a scheme of a nitric acid synthesis plant including the ammonia burner 1 of Fig. 1.

A stream of ammonia 130 and air 38 are mixed together to form the input mixture 4 feed to the ammonia burner 1. This ammonia stream 130 may be the full output of an ammonia synthesis plant or only a part thereof. The mixing between the ammonia stream 130 and air 38 may occur prior to the burner 1, as shown in Fig. 6, or through direct injection into the ammonia oxidation section 2 using two separate lines carrying ammonia and air as separate streams.

The cooled NOx-containing gas 403 is sent to an absorption tower 31 wherein NO₂ is absorbed in water to yield nitric acid 32 and a tail gas 33 mostly composed of nitrogen with N₂O and residual amounts of NOₓ.

Said tail gas 33 is further heated in a heat exchanger 40, and processed in unit 34 for removal of NOx and optionally of N₂O. The so obtained cleaned gas 35 is work-expanded in an expander 36 for energy recovery and the expanded gas 37 at the exhaust is discharged into the atmosphere.

The hot process stream 90 (e.g. steam) leaving the heat exchange section 3 of the ammonia burner 1 may be work-expanded in an expander for energy recovery or may be used or partially used to heat the tail gas 33 leaving the adsorption tower 31 in the heat exchange 40 (not shown in the figure).

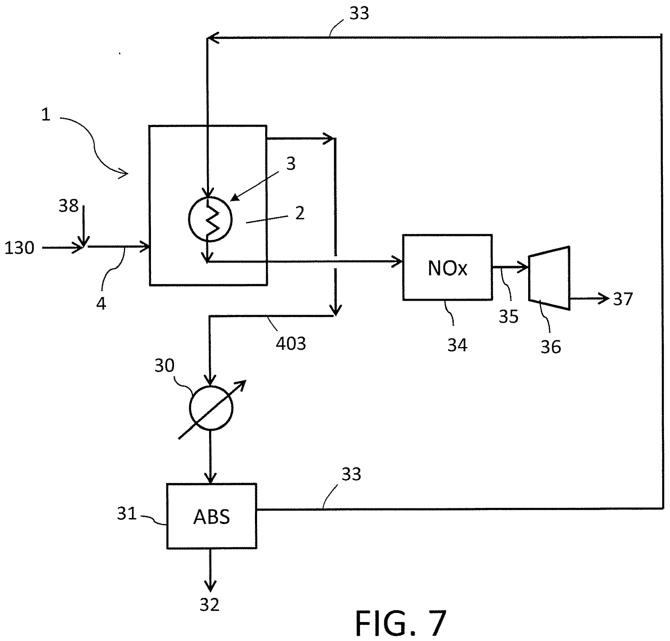

Fig. 7 illustrates a variant embodiment wherein the ammonia burner 1 is used to heat the tail gas 33 of the absorption tower 31. The tail gas 33 traverses the tube side of the heat exchange section 3 and leaves the combined burner 1 as heated gas 900 sent to the above described unit 34 and expander 36. Compared with Fig. 6, it can be said that the heat exchange section 3 incorporated in the ammonia burner 1 replaces the tail gas heater 40.

In this embodiment, the NOx-containing gas 403 is further cooled in a heat exchanger 30 before it reaches the absorption tower 31. This cooling may be appropriate if the heat removed by the gas 33 is not sufficient to cool the gas to the appropriate temperature for the absorber 31.

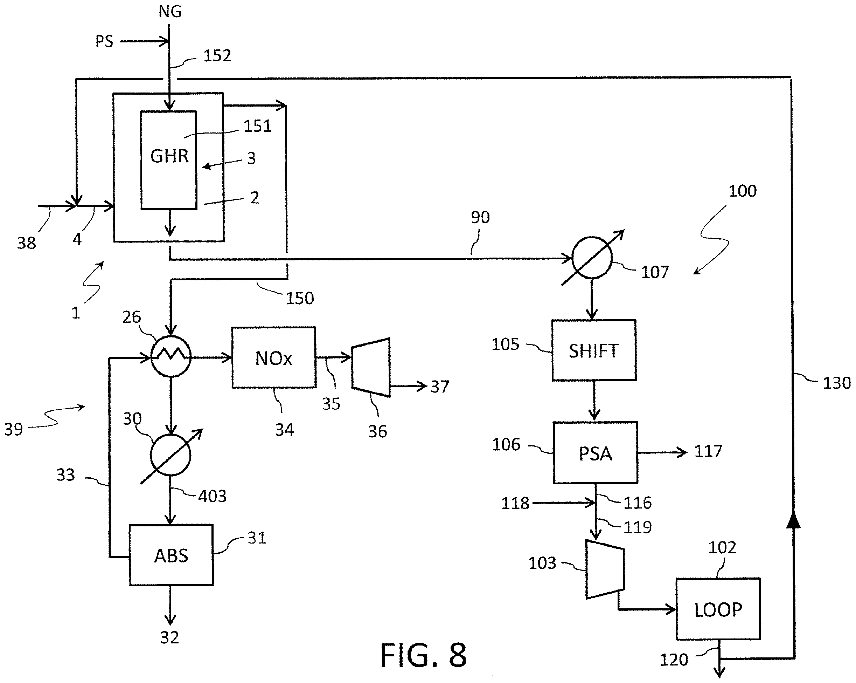

Fig. 8 illustrates an embodiment wherein the combined ammonia burner 1 performs the function of a gas-heated reactor for a tied-in ammonia synthesis section.

A section 39 for the synthesis of nitric acid is coupled with a section 100 for the synthesis of ammonia. Said ammonia section 100 essentially includes a front-end which provides a make-up gas 119 and a synthesis loop 102 which converts said make-up gas 119 into ammonia 120. The synthesis loop 102 is fed by a syngas compressor 103.

The process stream 9 in this example is a mixture 152 of natural gas NG and steam PS. The stream 90 represents a reformed gas which is sent to the front-end of the ammonia plant, where it is cooled and purified to obtain the make-up gas 119.

An ammonia stream 130 taken from the output of the synthesis loop 102 is directed to the combined ammonia burner 1. Together with air 38, said ammonia stream 130 forms the input mixture 4. This ammonia stream 130 may be the full output of the loop 102 or only a part thereof. The cooled ammonia oxidation gas 150 leaving the ammonia burner 1 is processed in the nitric acid section 39 for the production of nitric acid 32.

The NOx-containing gas 150 is further cooled in a first heat exchanger 26 and then in a second heat exchanger 30. The so obtained cooled gas 403 is sent to the absorption tower 31 wherein NO₂ is absorbed in water to yield nitric acid 32 and tail gas 33. Said tail gas 33 is heated in the first heat exchanger 26, with heat removed from the gas 403; processed in unit 34 for removal of NOₓ and N₂O; then expanded as above described.

In the ammonia section 100, the hydrogen-containing reformed gas 90 obtained from the GHR section 151 is cooled in a heat exchanger 107 and subject to a water-shift reaction in a shift reactor 105 and removal of CO₂ in a suitable CO₂ removal section 106, for example a pressure swing adsorption (PSA) section. Said CO₂ removal section provides a substantially CO₂-free purified gas 116 and a CO₂-containing tail gas 117.

If necessary, said purified gas 116 may be added with nitrogen 118 to provide the make-up gas 119 with the required H₂: N₂ molar ratio for the ammonia synthesis reaction. The so obtained make-up gas 119 is then fed to the syngas compressor 103 and to the ammonia synthesis loop 102.

The heat removed from hot gas in the various heat exchangers may be used for the production of steam.

## Claims

1. Ammonia burner reactor (1) for the catalytic oxidation of gaseous ammonia in a nitric acid production process, comprising an ammonia oxidation section (2) suitable for catalytic oxidation of gaseous ammonia in presence of oxygen (4) to produce a nitrogen oxides-containing effluent gas (402);
**characterised in that**:
the ammonia burner comprises a heat exchange section (3) wherein said heat exchange section (3) occupies a central axial region of the ammonia burner reactor (1) and said ammonia oxidation section (2) has an annular configuration and is arranged coaxially around the heat exchange section (3);
the heat exchange section (3) includes a first side arranged to be traversed by a process stream (9) and a second side arranged to be traversed by at least part of said nitrogen oxides-containing gas (402) effluent from the ammonia oxidation section (2);
said first side and second side of the heat exchange section being arranged so that they are not in a fluid communication whilst heat can be transferred from the nitrogen oxides-containing gas (402) flowing in the second side to the process stream (9) flowing in the first side, so that the gas (402) in the second side can be a heat source for the process stream (9).

2. Reactor according to claim 1, wherein the heat exchange section (3) includes a bundle of tubes (8), said first side being the inside of the tubes and said second side being a region outside and around the tubes.

3. Reactor according to claim 1 or 2 wherein the ammonia oxidation section is arranged to be traversed with a radial or axial-radial flow and the ammonia oxidation catalyst is in a granular form.

4. Reactor according to claim 1 or 2 wherein:
the ammonia oxidation section (2) includes a catalytic basket (6), which contains an ammonia oxidation catalyst;
the reactor (1) includes a plurality of radially arranged beams (10) arranged to support said basket (6);
each of said beams (10) extends from an inner beam support (41) to an outer beam support (42), the inner support being integral with an internal shell (16) delimiting the shell side of the heat exchange section (3).

5. Reactor according to claim 4, wherein:
the outer beam support (42) is integral with a wall (43) surrounding the annular ammonia oxidation section (2) and delimiting a cooling channel (5) between said wall (43) and a pressure vessel (P) of the reactor.

6. Reactor according to claim 4 or 5 wherein a heat exchanger (501) is interposed between the catalyst-retaining basket (6) and the radial beams (10).

7. Reactor according to any of claims 4 to 6 wherein said radial beams (10) are hollow bodies including an internal channel arranged to be traversed by a cooling medium, said cooling medium being preferably a portion of a mixture of ammonia and an oxidant fed to the combined reactor.

8. Reactor according to claim 7, wherein the reactor includes at least a first inlet for a primary stream of said mixture of ammonia and oxidant, which is directed to the ammonia oxidation section, and a second inlet for a secondary stream of said mixture, wherein said second inlet is in communication with the internal channels of the support beams, so that said secondary stream traverses the internal channels of the support beams acting as a cooling medium before joining with the primary stream.

9. Reactor according to any of claims 4 to 8 wherein the ammonia oxidation section includes an ammonia oxidation catalyst in the form of a catalyst gauze (61) including one or more layers of a wire gauze and the catalyst gauze is divided into multiple radial segments (20, 21, 22).

10. Reactor according to claim 9 wherein said radial segments (20, 21, 22) are arranged so that adjacent radial segments overlap and the number of overlapping radial segments is constant over the surface of the catalyst gauze.

11. Reactor according to claim 9 or 10, wherein the radial segments are fixed on the wall of the catalyst-retaining basket (6) through a support comprising multiple concentric rings or a ring arranged in sectors.

12. A plant for the production of nitric acid including an ammonia burner reactor according to any of the previous claims, wherein the first side of the heat exchange section (3) of the ammonia burner reactor is connected to a line carrying a process stream (9) of the nitric acid production process.

13. A plant according to claim 12 wherein the plant includes an absorber wherein nitric acid and a tail gas are produced, said line connected to the first side of the heat exchange section of the ammonia burner reactor is a line arranged to feed said tail gas of the absorber to an expander for energy recovery, so that the heat exchange section (3) of the ammonia burner (1) acts as heater of the tail gas (33) before expansion.

14. A plant according to claim 12 wherein said line, which is connected to the first side of the heat exchange section of the ammonia burner reactor, is part of a steam system of the plant so that the heat exchange section (3) of the ammonia burner (1) acts as heat recovery exchanger for the production of steam which is incorporated in the ammonia burner.

15. A plant according to claim 12 wherein said line, which is connected to the first side of the heat exchange section of the ammonia burner reactor, is part of an ammonia plant coupled to the nitric acid plant and said line is carrying a mixture of hydrocarbon and steam to be reformed, so that the heat exchange section (3) of the ammonia burner (1) acts as a gas-heated reformer incorporated in the ammonia burner.

16. Process for the synthesis of nitric acid including:
catalytic oxidation of ammonia to obtain a nitrogen-oxides containing gas;
absorption of said nitrogen-oxides containing gas, optionally after a removal of nitrous oxide N₂O, to obtain nitric acid and a tail gas;
wherein:
catalytic oxidation of ammonia is performed in a reactor (1) according to any of claims 1 to 11;
at least part of said nitrogen-oxides containing gas (402) produced by the oxidation of ammonia traverses the first side of the heat exchange section (3) of the reactor (1), transferring heat to a process stream (9) traversing the second side of said section, said process stream being any of:
a tail gas (33) resulting from the absorption step and directed to expansion, so that the tail gas is heated before expansion;
a cooling stream of water or steam;
a mixture (152) of hydrocarbon and steam so that the heat from said hot gas is used for a gas-heated reforming process of said mixture.
